Europäisches Patentamt

European Patent Office

Office européen des brevets

(11) Veröffentlichungsnummer : **0 111 736
B1**

(12) **EUROPÄISCHE PATENTSCHRIFT**

(45) Veröffentlichungstag der Patentschrift :
05.03.86

(21) Anmeldenummer : 83111261.0

(22) Anmeldetag : 11.11.83

(51) Int. Cl.⁴ : **A 01 N 25/22, A 01 N 43/84,
A 01 N 43/40 // (A01N43/84,
43:38, 43:40, 43:38)**

(54) **Fungizides Mittel und Verfahren zu dessen Herstellung.**

(30) Priorität : 16.12.82 CH 7321/82

(43) Veröffentlichungstag der Anmeldung :
27.06.84 Patentblatt 84/26

(45) Bekanntmachung des Hinweises auf die Patenterteilung : 05.03.86 Patentblatt 86/10

(84) Benannte Vertragsstaaten :
**AT BE CH DE FR GB IT LI NL SE**

(56) Entgegenhaltungen :
EP-A- 0 014 999
EP-A- 0 048 997

(73) Patentinhaber : **F. HOFFMANN-LA ROCHE & CO.
Aktiengesellschaft**

**CH-4002 Basel (CH)**

(72) Erfinder : **Hugener, Hans-Peter
Buenstrasse 52
CH-8600 Dübendorf (CH)**
Erfinder : **Roth, Willy, Dr.
Hardstrasse 24
CH-4802 Strengelbach (CH)**

(74) Vertreter : **Aschert, Hubert et al
Grenzacherstrasse 124 Postfach 3255
CH-4002 Basel (CH)**

**Beschreibung**

Als fungizide Wirkstoffe sind das 4-[3-(p-tert.Butylphenyl)-2-methylpropyl]-2,6-dimethylmorpholin unter der Kurzbezeichnung Fenpropimorph und das 4-[3-(p-tert.Butylphenyl)-2-methylpropyl]-piperidin unter der Kurzbezeichnung Fenpropidin bekannt. Ferner ist das N-(1,1,2,2-Tetrachlorethylmercapto)-tetrahydrophthalimid unter der Kurzbezeichnung Captafol als fungizide Wirksubstanz bekannt. Es wurde auch bereits vorgeschlagen, Verbindungen vom Typ des Fenpropimorphs und des Fenpropidins mit Captafol zu kombinieren. Wenn man diesem Vorschlag folgt und das Fenpropimorph bzw. das Fenpropidin mit Captafol kombiniert, so erhält man ein Produkt, das eine nur geringe Stabilität und einen nicht tolerierbaren Abbau, verbunden mit einer Beeinträchtigung der physikalisch-chemischen Eigenschaften von damit hergestellten Spritzpulvern aufweist. Dieser nachteilige Befund stand bisher der Verwendung eines derartigen Kombinationspräparates entgegen.

Es wurde nun überraschend gefunden, dass man ein fungizides Präparat mit ausgezeichneter Stabilität erhält, wenn man das Fenpropimorph bzw. das Fenpropidin nicht in Form der Base, sondern in Form eines Salzes mit einer starken Säure verwendet.

Die vorliegende Erfindung betrifft somit ein fungizides Mittel, welches dadurch gekennzeichnet ist, dass es Fenpropimorph oder Fenpropidin in Form eines Salzes mit einer starken Säure, in Kombination mit Captafol enthält.

Ein derartiges fungizides Präparat zeichnet sich durch ausgezeichnete chemische Stabilität aus und weist auch zufriedenstellende physikalisch-chemische Eigenschaften, beispielsweise eine gute Schwebefähigkeit, auf.

Als zur Salzbildung geeignete starke Säuren eignen sich ein- und zweibasische Mineralsäuren und organische Säuren.

Vorzugsweise liegt das Fenpropimorph bzw. das Fenpropidin im erfindungsgemässen fungiziden Präparat in Form eines Salzes mit einer Säure vor, welche einen $pK_S$-Wert $\leqslant 2$, insbesondere einen $pK_S$-Wert $\leqslant 1,8$ aufweist. Unter $pK_S$-Wert ist hierbei der negative dekadische Logarithmus der Säuredissoziationskonstante zu verstehen, und zwar bezieht sich dieser Wert bei einer zweibasischen Säure auf die erste Dissoziationsstufe. So weisen beispielsweise folgende Säuren die folgenden $pK_S$-Werte auf : Salzsäure : $-6$ ; Schwefelsäure : $-3$ ; Salpetersäure : $-1,3$ ; Methansulfonsäure : $-1,2$ und Maleinsäure : $+1,8$.

Besonders bevorzugt ist im Rahmen der vorliegenden Erfindung ein fungizides Mittel, welches das Fenpropimorph bzw. das Fenpropidin in Form des Hydrochlorids enthält.

Weitere bevorzugte fungizide Mittel der vorliegenden Erfindung sind solche, welche das Fenpropimorph bzw. das Fenpropidin in Form des Sulfats, Nitrats, Methansulfonats oder Maleinats enthalten.

Die Wirksubstanzen können im erfindungsgemässen fungiziden Mittel in einem weiten Gewichtsverhältnisbereich vorliegen, beispielsweise im Gewichtsverhältnis Salz : Captafol von etwa 1 : 1 bis 1 : 3, vorzugsweise von 1 : 1 bis 1 : 2.

Das erfindungsgemässe fungizide Mittel ist insbesondere ein Spritzpulver, ein dispersionsfähiges Granulat oder ein Suspensionskonzentrat.

Das erfindungsgemässe fungizide Mittel kann neben den genannten Wirksubstanzen auch noch weitere Wirksubstanzen enthalten, insbesondere aber übliche inerte Trägermaterialien, wie beispielsweise Kieselsäure, Kalziumcarbonat und dergleichen, sowie weitere Hilfsstoffe, wie Netzmittel, Dispergiermittel und dergleichen.

Die vorliegende Erfindung bezieht sich ferner auf ein Verfahren zur Herstellung des genannten fungiziden Mittels, welches darin besteht, dass man die Wirkstoffe zusammen mit Trägermaterialien und erforderlichenfalls weiteren Hilfsstoffen vermengt. Dies kann beispielsweise auch dadurch erfolgen, dass man die zur Neutralisation der Base notwendige Säuremenge erst bei der Ausmischung der Formulierung zugibt.

Die vorliegende Erfindung schafft ein stabiles Kombinationspräparat, welches gute physikalisch-chemische Eigenschaften aufweist und im Hinblick auf sein breites Wirkungsspektrum ein ausgezeichnetes Mittel zur Bekämpfung von Pilzbefall bei Getreide darstellt, wobei das Salz von Fenpropimorph bzw. Fenpropidin gegen Rostkrankheiten (insbesondere gegen Puccinia-Arten) und Mehltau (Erysiphe graminis), und Captafol gegen Aehrenkrankheiten (insbesondere gegen Septoria- und Fusarium-Arten) wirkt. Die erforderliche Dosierung beträgt für Fenpropimorph-Hydrochlorid etwa 500-1 000 g/ha, insbesondere 560-750 g/ha und für Captafol etwa 800-1 400 g/ha, insbesondere 900-1 260 g/ha, wobei diese Dosierungen bei den erfindungsgemässen Präparaten mit einem Aufwand von 2-4 kg des Präparates (Wirkstoffe, Träger- und Hilfsstoffe) pro Hektare erreicht werden.

Beispiel 1

Es werden in üblicher Weise die Spritzpulverpräparate A, B und C hergestellt, welche folgende Zusammensetzungen aufweisen :

2

|                                    | A          | B          | C          |
|------------------------------------|------------|------------|------------|
| Fenpropimorph-Hydrochlorid         | 21,0%      | 39,2%      | 33,6%      |
| Captafol                           | 42,0       | 45,0       | 38,4       |
| Oleylalkohol-(10)-Aethoxilat       | 4,0        | 4,0        | 4,0        |
| Polyvinylalkohol                   | 1,0        | 1,0        | 1,0        |
| Kieselsäure                        | 3,5        | 5,0        | 5,0        |
| Kaolin                             | qsp 100,0% | qsp 100,0% | qsp 100,0% |

Nach 3-monatiger Lagerung dieser Präparate bei 50 °C wird eine Abnahme des Captafol-Gehaltes um etwa 3-5 % festgestellt, während bei ähnlichen Präparaten, welche jedoch das Fenpropimorph in Form der freien Base enthalten, der Captafol-Gehalt um etwa 30-40 % abnimmt.

### Beispiel 2

In einer Mischvorrichtung werden 18,7 g Fenpropimorph (als freie Base) auf 20 g Kieselsäure aufgezogen. Zu dieser pulverförmigen Mischung gibt man 12 g Salpetersäure (34 %ig) und mischt gut durch. Nun werden 42 g Captafol, 4 g Nonylphenoläthoxylat (Netzmittel) und 3,3 g Polycarboxylat (Dispergiermittel) zugemischt. Dabei kann das Wasser, welches in Form der verdünnten Salpetersäure dem Produkt zugegeben wurde, im Endprodukt belassen oder aber durch Trocknung entfernt werden. Die fertige Mischung wird in einer Stiftmühle gemahlen, um die für Spritzpulver übliche Feinheit zu erlangen.

Das erhaltene Produkt weist in einem beschleunigten Stabilitätstest bei erhöhter Temperatur nach dreitägiger Lagerung bei 80 °C keinen messbaren Captafol-Abbau auf, während in einem vergleichsweise hergestellten Spritzpulver mit den gleichen Hilfsstoffen, jedoch ohne Salpetersäurezugabe, 26 % des Captafol-Gehaltes zersetzt werden.

### Beispiel 3

Es werden 21 g Fenpropimorph-Hydrochlorid, 42 g Captafol, 4 g Kieselsäure und 24 g Kaolin zusammen vermischt und in der für die Herstellung von Spritzpulvern üblichen Art gemahlen. Diese Mischung wird in einem Granuliergerät mit einer wässrigen Lösung besprüht, welche 4 g Nonylphenol-(10)-Aethoxylat und 4 g Polycarboxylat enthält.

Durch das Aufsprühen dieser Lösung bildet das befeuchtete Pulver kleine runde Agglomerate. Der Prozess wird so gesteuert, dass die Hauptmenge der Agglomerate zwischen 0,5 und 2 mm Durchmesser liegt. Die so erzeugten frei fliessenden Granulat-Formulierungen können nach Trocknung und Aussieben in Wasser dispergiert und vom Anwender wie Spritzpulver versprüht werden.

### Beispiel 4

In einem Becherglas werden 200 g Wasser, 50 g Aethylenglykol, 10 g Formaldehyd (30 %ig), 30 g äthoxyliertes Arylphosphat (Netzmittel), 10 g Acrylester/Acrylsäure-triäthanolaminsalz-Copolymerisat (Dispergator) und 5 g Silicon-Entschäumer gelöst. Darin dispergiert man 280 g Fenpropimorph-Hydrochlorid und 320 g Captafol, sowie als Verdickungsmittel 2 g Xanthan Gum. Die so erhaltene dickflüssige Suspension wird in einer Nassmühle auf eine Teilchengrösse von weniger als 5 μm gemahlen. Anschliessend füllt man mit Wasser auf 1 000 ml auf.

Das so erhaltene Suspensionskonzentrat weist in einem dreitägigen Stabilitätstest bei 80 °C nur einen minimalen Captafol-Abbau auf, während ein vergleichsweise unter Verwendung der freien Fenpropimorphbase hergestelltes Suspensionskonzentrat eine Captafol-Zersetzung von über 80 % ergibt.

### Beispiel 5

In den obigen Beispielen können mit ähnlichem Effekt anstelle der Fenpropimorph-Salze auch die entsprechenden Fenpropidin-Salze verwendet werden. Es hat sich beispielsweise gezeigt, dass bei einem Spritzpulverpräparat der nachfolgenden Zusammensetzung nach 3-monatiger Lagerung praktisch immer noch der Nominalgehalt an Wirkstoffen vorhanden ist, während in einem unter Verwendung der freien Fenpropidinbase hergestellten Spritzpulver das Captafol nahezu vollständig zersetzt ist.

3

**0 111 736**

Zusammensetzung des Präparates :

| | |
|---|---|
| Fenpropidin-Hydrochlorid | 34 % |
| Captafol | 50 % |
| Oleylalkohol-(10)-Aethoxilat | 4 % |
| Polyvinylalkohol | 1 % |
| Kieselsäure | 5 % |
| Kaolin | qsp 100 % |

## Patentansprüche

1. Fungizides Mittel, dadurch gekennzeichnet, dass es Fenpropimorph (4-[3-(p-tert.Butylphenyl)-2-methylpropyl]-2,6-dimethylmorpholin) oder Fenpropidin (4-[3-p-tert.Butylpheny]-2-methylpropyl-piperidin) in Form eines Salzes mit einer starken Säure, in Kombination mit Captafol (N-(1,1,2,2-Tetrachlorethylmercapto)-tetrahydrophthalimid) enthält.

2. Fungizides Mittel nach Anspruch 1, dadurch gekennzeichnet, dass es Fenpropimorph oder Fenpropidin in Form eines Salzes mit einer Säure mit einem $pK_S$-Wert $\leqslant$ 2, insbesondere einem $pK_S$-Wert $\leqslant$ 1,8 enthält.

3. Fungizides Mittel nach Anspruch 1 oder 2, dadurch gekennzeichnet, dass es Fenpropimorph oder Fenpropidin in Form des Hydrochlorids enthält.

4. Fungizides Mittel nach Anspruch 1 oder 2, dadurch gekennzeichnet, dass es Fenpropimorph oder Fenpropidin in Form des Sulfats, Nitrats, Methansulfonats oder Maleinats enthält.

5. Fungizides Mittel nach einem der Ansprüche 1 bis 4, dadurch gekennzeichnet, dass es die Wirksubstanzen im Gewichtsverhältnis von etwa 1 : 1 bis 1 : 3, vorzugsweise von 1 : 1 bis 1 : 2 (Salz : Captafol) enthält.

6. Fungizides Mittel nach einem der Ansprüche 1 bis 5, in Form eines Spritzpulvers, eines Granulats oder eines Suspensionskonzentrats.

7. Verfahren zur Herstellung eines fungiziden Mittels nach einem der Ansprüche 1 bis 6, dadurch gekennzeichnet, dass man die Wirkstoffe zusammen mit Trägermaterialien und erforderlichenfalls weiteren Hilfsstoffen vermengt.

## Claims

1. A fungicidal composition, characterized in that it contains fenpropimorph (4-[3-(p-tert.butylphenyl)-2-methylpropyl]-2,6-dimethylmorpholine) or fenpropidin (4-[3-p-tert.butylphenyl]-2-methylpropyl-piperidine) in the form of a salt with a strong acid, in combination with captafol (N-(1,1,2,2-tetrach-loroethylmercapto)-tetrahydrophthalimide).

2. A fungicidal composition according to claim 1, characterized in that it contains fenpropimorph or fenpropidin in the form of a salt with an acid having a $pK_a$ value $\leqslant$ 2, especially a $pK_a$ value $\leqslant$ 1.8.

3. A fungicidal composition according to claim 1 or 2, characterized in that it contains fenpropimorph or fenpropidin in the form of the hydrochloride.

4. A fungicidal composition according to claim 1 or 2, characterized in that it contains fenpropimorph or fenpropidin in the form of the sulphate, nitrate, methanesulphonate or maleate.

5. A fungicidal composition according to any one of claims 1 to 4, characterized in that it contains the active substances in the weight ratio of about 1 : 1 to 1 : 3, preferably of 1 : 1 to 1 : 2 (salt : captafol).

6. A fungicidal composition according to any one of claims 1 to 5 in the form of a spray powder, a granulate or a suspension concentrate.

7. A process for the manufacture of a fungicidal composition according to any one of claims 1 to 6, characterized by mixing the active substances together with carrier materials and, where required, additional adjuvants.

## Revendications

1. Produit fongicide caractérisé en ce qu'il contient du Fenpropimorph (4-[3-(p-tert.butylphényl)-2-méthylpropyl]-2,6-diméthylmorpholine) ou du Fenpropidin (4-[3-p-tert.butylphényl]-2-méthylpropyl-pipé-ridine) à l'état de sel d'un acide fort, en combinaison avec du Captafol (N-(1,1,2,2-tétrachloréthylmer-capto)-tétrahydrophthalimide).

2. Produit fongicide selon la revendication 1, caractérisé en ce qu'il contient le Fenpropimorph ou le Fenpropidin à l'état de sel d'un acide présentant une valeur de $pK_A$ inférieure ou égale à 2 et en particulier inférieure ou égale à 1,8.

3. Produit fongicide selon la revendication 1 ou 2, caractérisé en ce qu'il contient le Fenpropimorph ou le Fenpropidin à l'état de chlorhydrate.

4

4. Produit fongicide selon la revendication 1 ou 2, caractérisé en ce qu'il contient le Fenpropimorph ou le Fenpropidin à l'état de sulfate, de nitrate, de méthane-sulfonate ou de maléate.

5. Produit fongicide selon l'une des revendications 1 à 4, caractérisé en ce qu'il contient les substances actives dans des proportions relatives en poids (sel/captafol) d'environ 1 : 1 à 1 : 3, de préférence de 1 : 1 à 1 : 2.

6. Produit fongicide selon l'une des revendications 1 à 5, à l'état de poudre à pulvériser, de granulés ou de concentré pour suspensions.

7. Procédé de préparation d'un produit fongicide selon l'une des revendications 1 à 6, caractérisé en ce que l'on mélange les substances actives avec des véhicules et, lorsque c'est nécessaire, d'autres produits auxiliaires.